# EUROPÄISCHE PATENTSCHRIFT

(11) **EP 2 434 162 B1**
(45) Veröffentlichungstag und Bekanntmachung des Hinweises auf die Patenterteilung: **22.04.2020**
(21) Anmeldenummer: 11007154.5
(22) Anmeldetag: 03.09.2011
(51) Int. Cl.: F04D 25/06, F04D 25/08, A47L 5/14, H02K 1/18, H02K 7/14, H02K 9/06

(54) **Handgeführtes Blasgerät**
Handheld blowing device
Appareil de soufflage manuel

(30) Priorität: 27.09.2010 DE 102010046565
(43) Veröffentlichungstag der Anmeldung: 28.03.2012
(73) Patentinhaber: Andreas Stihl AG & Co. KG, 71336 Waiblingen (DE)
(72) Erfinder: Binder, Andreas, 70372 Stuttgart (DE)
(74) Vertreter: Reinhardt, Annette

(56) Entgegenhaltungen:
- US-A- 2 753 434
- US-A1- 2003 233 730
- US-A1- 2005 104 469
- US-A1- 2008 089 785

## Beschreibung

Die Erfindung betrifft ein handgeführtes Blasgerät der im Oberbegriff des Anspruchs 1 angegebenen Gattung.

Aus der US 4,884,314 ist ein Blasgerät bekannt, das ein einstufiges Axialgebläse besitzt. Zum Antrieb des Gebläserads dient ein Elektromotor, der als Innenläufermotor ausgebildet ist. Der Motor ist an seiner Außenseite im Gehäuse fixiert. An der Antriebswelle des Motors ist direkt das Gebläserad befestigt.

Aus der US 2,753,434 A geht ein Sauggerät hervor, das einen Antriebsmotor besitzt. Der Stator des Antriebsmotors ist im Gehäuse fest verschraubt. Die Antriebswelle ist im Gehäuse über Kugellager drehbar gelagert.

Die US 2005/0104469 A1 zeigt einen Motor, bei dem die axiale Relativposition von Rotor und Stator verändert werden kann, um Drehzahl und Drehmoment des Motors anzupassen. Hierzu ist der Rotor des Motors in Richtung der Achse der Antriebswelle beweglich auf der Antriebswelle gelagert.

Der Erfindung liegt die Aufgabe zugrunde, ein handgeführtes Blasgerät mit alternativem Aufbau anzugeben.

Diese Aufgabe wird durch ein handgeführtes Blasgerät mit den Merkmalen des Anspruchs 1 gelöst.

Der Motor ist auf der Antriebswelle gelagert, die ihrerseits drehbar im Gehäuse des Blasgeräts gelagert ist. Eine direkte Lagerung des Motors im Gehäuse kann so entfallen. Der Stator des Motors stützt sich lediglich gegenüber dem Gehäuse entgegen der Drehrichtung ab. Die Abstützung muss lediglich sicherstellen, dass der Stator nicht mit dem Rotor mitdrehen kann, so dass an die Abstützung keine besonderen Anforderungen hinsichtlich der Genauigkeit gestellt werden. Dadurch, dass der Stator in mindestens einer Richtung beweglich gegenüber dem Gehäuse ist, können Fertigungstoleranzen ausgeglichen werden, und ein Verspannen der Antriebswelle und des Stators im Gehäuse werden vermieden. Die Lagesicherung des Stators in der mindestens einen Richtung erfolgt vorteilhaft über die Antriebswelle, so dass der Stator nach der Montage im Wesentlichen ortsfest im Gehäuse angeordnet ist. Die Beweglichkeit des Stators gegenüber dem Gehäuse vor der Montage der Antriebswelle kann dabei eine translatorische und/oder rotatorische Beweglichkeit sein.

Der Stator kann gegenüber dem Gehäuse verkippen. Dadurch, dass ein Verkippen des Stators gegenüber dem Gehäuse möglich ist, können Toleranzen ausgeglichen werden, und ein Verspannen des Antriebsmotors aufgrund geringer Fehler in der Ausrichtung von Antriebswellenlagerung und Statorabstützung ist vermieden. Die Kippbewegung erfolgt dabei um eine Achse, die senkrecht zur Drehachse des Axialgebläses steht. Die Beweglichkeit ist insbesondere begrenzt. Vorteilhaft ist die maximal mögliche Beweglichkeit, insbesondere die maximal mögliche Kipplage des Stators so gewählt, dass alle auftretenden Fertigungstoleranzen ausgeglichen werden können. Insbesondere ist der Stator gegenüber dem Gehäuse ausschließlich gegen Drehung abgestützt und in alle anderen Richtungen beweglich. Damit sind sowohl Bewegungen des Stators gegenüber dem Gehäuse in allen drei Raumrichtungen als auch Drehbewegungen um alle senkrecht zur Drehachse stehenden Raumachsen möglich.

Eine einfache Gestaltung ergibt sich, wenn der Motor einen Anschlussflansch besitzt, der mit dem Stator verbunden ist, wobei der Anschlussflansch im Gehäuse drehfest abgestützt ist. Der Anschlussflansch besitzt insbesondere ein Schraubauge, das üblicherweise zum Festschrauben des Stators am Gehäuse benutzt wird. Für das Blasgerät ist vorgesehen, dass das an bekannten Außenläufermotoren ohnehin vorhandene Schraubauge zwischen zwei Wandabschnitte des Gehäuses ragt und so in seiner Drehlage fixiert wird. Die Fixierung entgegen der Drehrichtung kann dabei mit oder ohne Spiel erfolgen. Entsprechende Wandabschnitte des Gehäuses sind insbesondere einteilig mit einem Gehäuseabschnitt ausgebildet, so dass sich ein einfacher Aufbau ergibt.

Für die Lagerung der Antriebswelle ist vorgesehen, dass ein erstes Lager der Antriebswelle benachbart zum Antriebsmotor angeordnet und als Festlager ausgebildet ist. Ein zweites Lager der Antriebswelle ist insbesondere benachbart zum Gebläseausgang angeordnet und als Loslager ausgebildet.

Zur Kühlung des Motors ist vorgesehen, dass der Rotor Lüfterrippen besitzt, die sich am Umfang und an der dem Axialgebläse zugewandten Vorderseite des Rotors erstrecken. Um auf einfache Weise eine drehfeste Verbindung zwischen dem Gebläserad und dem Rotor zu schaffen, ist vorgesehen, dass das Gebläserad mindestens einen Mitnahmeansatz besitzt, der zwischen zwei Lüfterrippen des Rotors ragt. Dadurch wird eine sehr einfache Gestaltung der drehfesten Verbindung zwischen Gebläserad und Rotor erreicht. Dadurch, dass die drehfeste Verbindung nicht benachbart zur Drehachse an der Antriebswelle, sondern radial vergleichsweise weit außen an den Lüfterrippen erfolgt, können hohe Drehmomente bei einfacher Gestaltung der Verbindung übertragen werden.

Vorteilhaft besitzt das Gebläse eine Außenwand und eine Innenwand. Die Innenwand begrenzt insbesondere einen Innenraum, in dem die Antriebswelle angeordnet ist. Die Gebläseschaufeln sind vorteilhaft in dem Ringraum zwischen Innenwand und Außenwand angeordnet. Ein einfacher, kompakter Aufbau ergibt sich, wenn der Antriebsmotor in dem Innenraum angeordnet ist. Der Antriebsmotor ist dabei insbesondere in der ersten, stromauf angeordneten Gebläsestufe des Axialgebläses, vorteilhaft in dem Gebläserad der ersten Gebläsestufe, angeordnet. Das Axialgebläse besitzt insbesondere mehrere Leiträder und mehrere Gebläseräder. Um eine Rückströmung von geforderter Luft über den Innenraum des Axialgebläses zu vermeiden, soll die Innenwand des Axialgebläses möglichst dicht ausgebildet sein. Hierzu ist vorgesehen, dass an jedem Leitrad und jedem Gebläserad ein Innenwandabschnitt angeformt ist. Benachbarte Innenwandabschnitte überlappen sich vorteilhaft, so dass eine labyrinthartige Abdichtung zwischen den Innenwandabschnitten erreicht wird. Dadurch kann eine Rückströmung von Luft im Innenraum trotz der aufgrund der Relativbewegung der Leiträder und Gebläseräder zueinander benötigten Spalte an der Innenwand weitgehend vermieden werden. An den Leiträdern ist vorteilhaft jeweils ein Außenwandwandabschnitt angeformt. Die Außenwandabschnitte der Leiträder bilden insbesondere eine im Wesentlichen durchgehende Außenwand des Axialgebläses. Die Gebläseräder, die jeweils stromauf der Leiträder angeordnet sind, besitzen demnach keine Außenwandabschnitte, so dass die Außenwand ausschließlich durch die Leiträder gebildet wird. Dadurch ergibt sich ein einfacher Aufbau. Da die Außenwand im Betrieb nicht rotiert, kann sie fest mit dem Außengehäuse verbunden werden. Die Gebläseräder und die Leiträder sind vorteilhaft jeweils als Gleichteile ausgebildet.

Um eine hohe Leistung zu erzielen, ist vorgesehen, dass das Gebläse mehrstufig ausgebildet ist und mindestens zwei Gebläseräder besitzt. Vorteilhaft sind die Gebläseräder miteinander formschlüssig verbunden. Ein einfacher konstruktiver Aufbau ergibt sich, wenn zur formschlüssigen Verbindung der Gebläseräder eine Hülse vorgesehen ist, die die Antriebswelle umgibt und die mit ihren Enden formschlüssig in benachbarte Gebläseräder eingreift. Die formschlüssige Verbindung über die Hülse kann mit einfachen Mitteln realisiert werden. Eine formschlüssige Verbindung zwischen der Antriebswelle und den Gebläserädern kann dadurch entfallen, so dass sich ein einfacher Aufbau ergibt.

Vorteilhaft besitzt das Axialgebläse einen Austrittskonus, an dem Strömungsleitrippen angeordnet sind. Die Strömungsleitrippen am Austrittskonus vergleichmäßigen die Strömung und führen zu einer Verbesserung des Wirkungsgrads des Axialblasgeräts. Die Strömungsleitrippen stellen außerdem einen Eingriffsschutz dar, so dass ein Eingreifen des Benutzers in das Axialgebläse durch die Strömungsleitrippen konstruktiv verhindert ist und hierzu keine weiteren Maßnahmen vorgesehen werden müssen.

Der Antriebsmotor ist insbesondere ein Außenläufermotor. Dadurch ergibt sich ein einfacher Aufbau.

Ein Ausführungsbeispiel der Erfindung wird im Folgenden anhand der Zeichnung erläutert. Es zeigen:
- Fig. 1: eine Seitenansicht eines Blasgeräts,
- Fig. 2: eine Seitenansicht in Richtung des Pfeils II in Fig. 1,
- Fig. 3: einen Schnitt entlang der Linie III-III in Fig. 2,
- Fig. 4: einen Schnitt entlang der Linie IV-IV in Fig. 2,
- Fig. 5: eine vergrößerte Darstellung des Axialgebläses aus Fig. 3,
- Fig. 6: einen Schnitt entlang der Linie VI-VI in Fig. 5,
- Fig. 7: einen Schnitt entlang der Linie VII-VII in Fig. 6
- Fig. 8: eine Seitenansicht auf das Axialgebläse in Richtung des Pfeils VIII in Fig. 5,
- Fig. 9 und 10: perspektivische Explosionsdarstellungen der Gebläseräder des Axialgebläses,
- Fig. 11: eine Seitenansicht der Gebläseräder,
- Fig. 12: einen Schnitt entlang der Linie XII-XII in Fig. 11 und
- Fig. 13: eine schematische Darstellung des Rotors des Antriebsmotors und eines Mitnahmeansatzes eines Gebläserads.

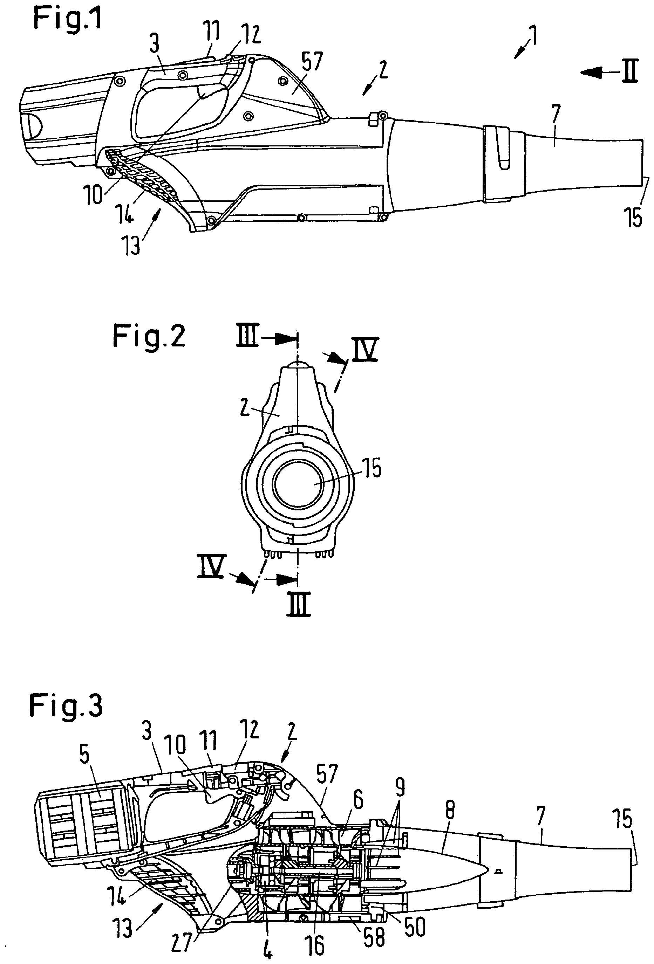

Fig. 1 zeigt ein handgeführtes Blasgerät 1, das ein Gehäuse 2 besitzt. Das Gehäuse 2 besitzt ein Außengehäuse 57, an dem ein Handgriff 3 ausgebildet ist. An dem Handgriff 3 sind ein Bedienhebel 10, eine Bedienhebelsperre 11 und ein Schieber 12 angeordnet. Das Blasgerät 1 besitzt ein Blasrohr 7 mit einer Luftaustrittsöffnung 15, durch die im Betrieb Arbeitsluft ausgeblasen wird. Die Luft wird über eine Lufteintrittsöffnung 13 angesaugt, die in einem Bereich unterhalb des Handgriffs 3 angeordnet ist und die von einem Gitter 14 abgedeckt ist. Die Luftaustrittsöffnung 15 ist auch in Fig. 2 gezeigt.

Wie Fig. 3 zeigt, ist benachbart zum Handgriff 3 ein Akku 5 angeordnet, der einen Antriebsmotor 4 des Blasgeräts 1 mit Energie versorgt. Im Gehäuse 2 ist ein Axialgebläse 6 angeordnet, das den Luftstrom von der Lufteintrittsöffnung 13 zur Luftaustrittsöffnung 15 fördert. Das Axialgebläse 6 ist in einem Innengehäuse 58 angeordnet, das einen Teil des Gehäuses 2 bildet und das in dem Außengehäuse 57 formschlüssig gehalten ist. An der der Lufteintrittsöffnung 13 zugewandten Seite ist am Axialgebläse 6 eine Lufteintrittshaube 27 angeordnet, die zur Lufteintrittsöffnung 13 hin gewölbt ist und die den Antriebsmotor 4 abdeckt. Der Antriebsmotor 4 treibt eine Antriebswelle 16 rotierend an. Am Gebläseausgang 50 ist ein Austrittskonus 8 angeordnet, der in Richtung auf das Blasrohr 7 ragt. Am Außenumfang des Austrittskonusses 8 sind eine Vielzahl von Strömungsleitrippen 9 vorgesehen. Die Lufteintrittshaube 27 und der Austrittskonus 8 bilden Teile des Innengehäuses 58.

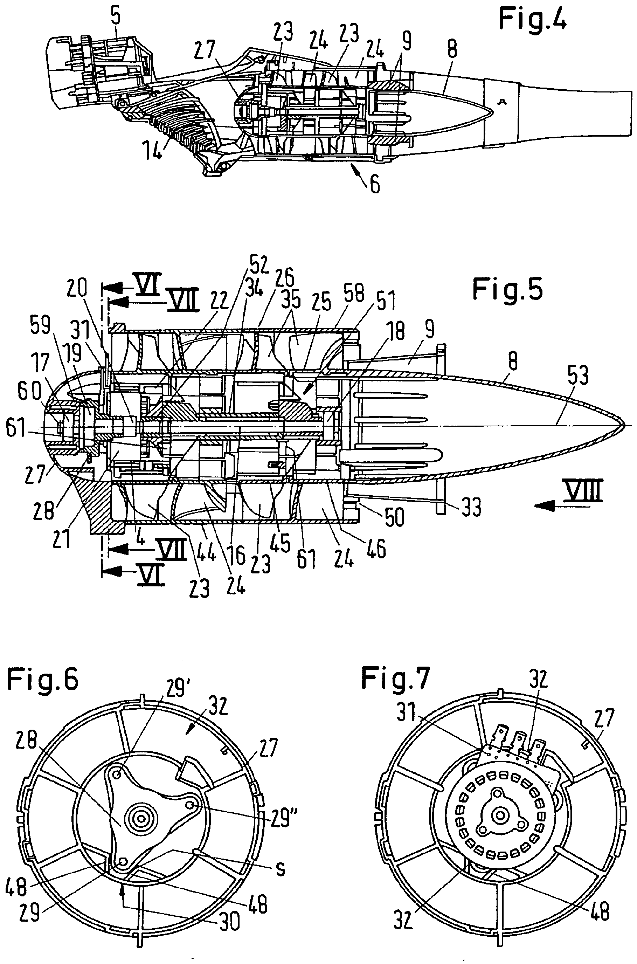

Die Strömungsleitrippen 9 sind in Fig. 4 im Schnitt gezeigt. Wie Fig. 4 auch zeigt, ist das Axialgebläse 6 mehrstufig, nämlich zweistufig ausgebildet und besitzt zwei rotierend angetriebene Gebläseräder 23 und zwei feststehende Leiträder 24, die in Strömungsrichtung abwechselnd und hintereinander angeordnet sind.

Fig. 5 zeigt den Aufbau des Axialgebläses 6 im Einzelnen. Die Antriebswelle 16 ist an der Lufteintrittshaube 27 mit einem ersten Lager 17 gelagert und benachbart zum Gebläseausgang 50 mit einem zweiten Lager 18. Das zweite Lager 18 stützt die Antriebswelle 16 gegenüber dem stromab angeordneten Leitrad 24 ab. Das erste Lager 17 ist als Festlager ausgebildet und das zweite Lager 18 als Loslager.

Der Antriebsmotor 4 besitzt einen Stator 21 und einen Rotor 22. Der Rotor 22 ist an einer Verbindung 52 drehfest mit der Antriebswelle 16 verbunden. Der innen liegende Stator 21 ist über ein erstes Lager 19 und ein zweites Lager 20 drehbar auf der Antriebswelle 16 gelagert, so dass sich die Antriebswelle 16 mit dem Rotor 22 gegenüber dem Stator 21 drehen kann. Das erste Lager 19 ist in einem Anschlussflansch 28 des Stators 21 angeordnet. Das zweite Lager 20 ist vorteilhaft als Nadellager ausgebildet und im Bereich der Wicklungen des Stators 21 angeordnet. In dem zwischen Anschlussflansch 28 und Stator 21 liegenden Bereich ist eine Steuerungsplatine 31 angeordnet, die den vorteilhaft elektronisch kommutierten Antriebsmotor 4 ansteuert. In axialer Richtung stützt sich der Antriebsmotor 4 mit dem Anschlussflansch 28 an einem an der Lufteintrittshaube 27 angeformten Rand 59 ab. In Gegenrichtung erfolgt die Fixierung über einen Sicherungsring 60, der an der Antriebswelle 16 angeordnet ist und der sich am ersten Lager 17 der Antriebswelle 16 abstützt. Die Abstützung des Stators 21 ist so ausgebildet, dass der Stator 21 sich nicht mitdrehen, aber gegenüber dem Gehäuse 2 um eine Achse senkrecht zur Drehachse 53 geringfügig verkippen kann. Aufgrund der großen Länge der Antriebswelle 16 und der gegebenen Fertigungstoleranzen kann die Antriebswelle 16 im Gehäuse 2 leicht gekippt angeordnet sein. Eine exakte Ausrichtung der Lager 17 und 18 der Antriebswelle 16 ist nur mit erheblichem Aufwand möglich. Da der Stator 21 nicht fest eingespannt ist, sondern ebenfalls geringfügig verkippen kann, ist ein Verspannen des Antriebsmotors 4 im Gehäuse 2 vermieden. Die endgültige Lagesicherung des Stators 21 erfolgt über die Antriebswelle 16 mit den Lagern 17 und 18. Zusätzlich erlaubt die Abstützung des Stators 21 eine begrenzte Bewegung des Stators 21 in Längsrichtung der Antriebswelle 16, da über den Sicherungsring 60 geringes Spiel gegeben ist. Auch senkrecht zur Antriebswelle 16 ist der Stator 21 vorteilhaft gegenüber dem Gehäuse 2 begrenzt beweglich. Dies kann durch entsprechende Wahl der Innenabmessungen der Lufteintrittshaube 27 erfolgen.

Die Antriebswelle 16 ist in einem Innenraum 51 des Axialgebläses 6 angeordnet, der von einer Innenwand 25 umgeben ist. Die Innenwand 25 ist durch die benachbarten Innenwandabschnitte 45 der Gebläseräder 23 und Innenwandabschnitte 46 der Leiträder 24 gebildet. Die Innenwand 25 trennt den Innenraum 51 von dem zwischen der Innenwand 25 und einer Außenwand 26 begrenzten Ringraum, in dem die Gebläseschaufeln 35 der Gebläseräder 23 und Leiträder 24 angeordnet sind. Die Außenwand 26 ist durch zwei Außenwandabschnitte 44 gebildet, die fest mit den Leiträdern 24 verbunden, insbesondere an diesen angeformt sind. Die Außenwand 26 bildet einen Teil des Innengehäuses 58 des Blasgeräts 1. Vorteilhaft sind die Leiträder 24 und die Gebläseräder 23 aus Kunststoff, und die Innenwandabschnitte 45 und 46 sowie die Außenwandabschnitte 44 sind an die Gebläseräder 23 bzw. Leiträder 24 angeformt. Wie Fig. 5 zeigt, ist der Antriebsmotor 4 im Innenraum 51 angeordnet, und zwar im Bereich der ersten Gebläsestufe, insbesondere innerhalb des stromauf liegenden Gebläserads 23 des Axialgebläses 6.

Die beiden Gebläseräder 23 sind über eine Verbindungshülse 34 drehfest miteinander verbunden. Die Verbindungshülse 34 ist im Innenraum 51 angeordnet und umgibt die Antriebswelle 16.

Zur Sicherung der Drehlage des Stators 21 ist der Anschlussflansch 28 an der Lufteintrittshaube 27 abgestützt. Wie Fig. 6 zeigt, besitzt der Anschlussflansch 28 drei Schraubaugen 29, 29', 29", die radial nach außen ragen. Wie Fig. 6 zeigt, ragt das Schraubauge 29 in eine zwischen den Wandabschnitten 48 gebildete Aufnahme 30. An einem Schraubauge 29 sind an beiden in Umfangsrichtung liegenden Seiten Wandabschnitte 48 der Lufteintrittshaube 27 angeordnet. Vorteilhaft ist das Schraubauge 29 mit Spiel zwischen den Wandabschnitten 48 gehalten, so dass sich eine toleranzunempfindliche Anordnung ergibt. Hierzu kann zwischen dem Schraubauge 29 und einem Wandabschnitt 48 der Abstand s gebildet sein. Der Stator 21 ist damit über den Anschlussflansch 28 und die einen Teil des Gehäuses 2 bildende Lufteintrittshaube 27 am Gehäuse 2 abgestützt. Am Außenumfang besitzt die Lufteintrittshaube 27 eine Aussparung 32, durch die die Steuerungsplatine 31 nach außen tritt. Dies ist in Fig. 7 gezeigt.

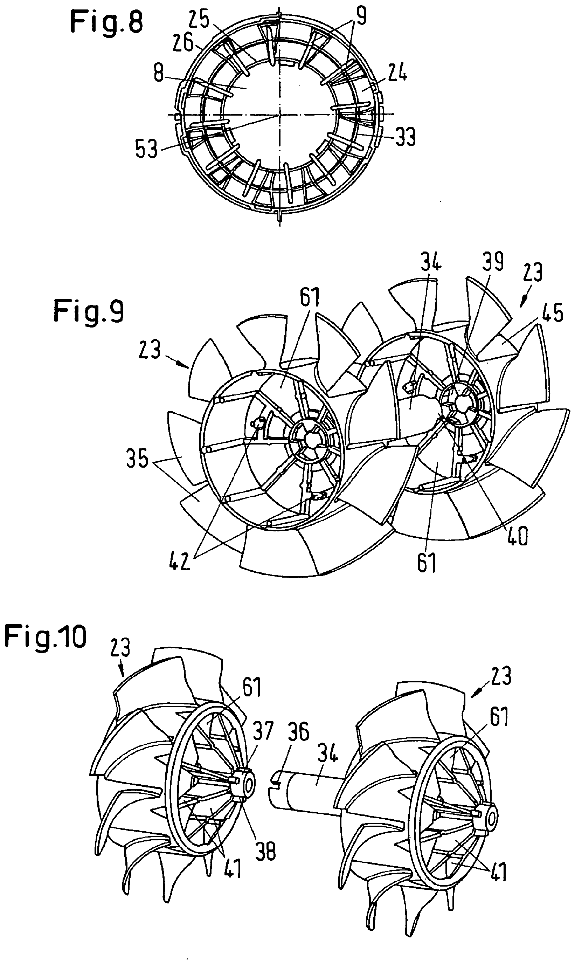

Fig. 8 zeigt die Gestaltung der Strömungsleitrippen 9 am Austrittskonus 8 im Einzelnen. Es sind eine Vielzahl von Strömungsleitrippen 9 vorgesehen, die sich am Umfang des Ausrittskonus 8 gleichmäßig verteilt in radialer Richtung zur Drehachse 53 des Axialgebläses 6 erstrecken. Wie Fig. 8 auch zeigt, erstrecken sich die Strömungsleitrippen 9 über annähernd den gesamten Ringraum zwischen der Innenwand 25 und der Außenwand 26. Wie Fig. 8 zeigt, sind die Strömungsleitrippen 9 über einen Versteifungsring 33 miteinander verbunden. Die Strömungsleitrippen 9 bilden einen Eingriffsschutz. Sie stellen sicher, dass ein Benutzer nicht über das Blasrohr 7 in das Axialgebläse 6 greifen kann.

Um einen einfachen Aufbau zu erreichen, sind die beiden Gebläseräder 23 und die beiden Leiträder 24 jeweils identisch zueinander ausgebildet. Dadurch wird die Anzahl der benötigten unterschiedlichen Einzelteile verringert. Die Fig. 9 und 10 zeigen die beiden Gebläseräder 23 und die Verbindungshülse 34 im Einzelnen. An ihrer dem Antriebsmotor 4 abgewandten Seite besitzt die Verbindungshülse 34 Mitnahmenocken 40, die in entsprechende Vertiefungen 39 des benachbarten Gebläserads 23 ragen. Fig. 9 zeigt auch die an der dem Antriebsmotor 4 zugewandten Seite der Gebläseräder 23 angeordneten Mitnahmeansätze 42, deren Funktion im Folgenden noch näher beschrieben wird. Die Gebläseräder 61 besitzen jeweils eine sich etwa senkrecht zur Drehachse 53 erstreckende Zwischenwand 61. Die Zwischenwände 61 unterteilen den Innenraum 51 in Abschnitte, wie auch in Fig. 5 gezeigt ist, und verhindern damit ein Zurückströmen der geförderten Luft über den Innenraum 51 zum Antriebsmotor 6.

An dem dem Antriebsmotor 4 zugewandten Ende besitzt die Verbindungshülse 34 die in Fig. 10 gezeigte Nut 36, die über einen Steg 38 am Gebläserad 23 geschoben wird. Über den Umfang verteilt sind insgesamt drei Nuten 36 und drei Stege 38 vorgesehen. Die Stege 38 sind an einem inneren Zapfen 37 des Gebläserads 23 ausgebildet. Die Verbindungshülse 34 ist damit in Drehrichtung formschlüssig mit beiden Gebläserädern 23 verbunden.

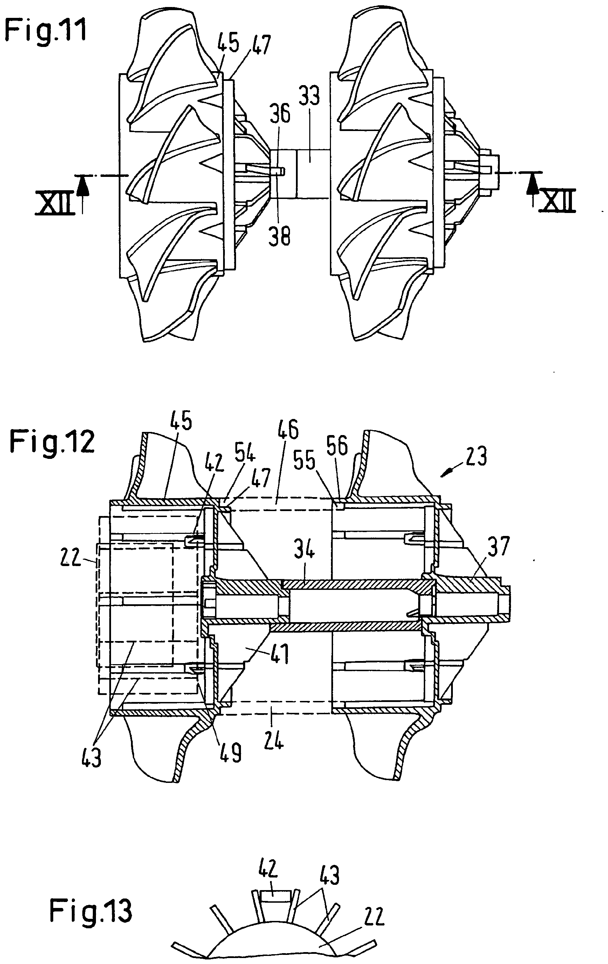

Wie Fig. 11 zeigt, ist an dem Innenwandabschnitt 45 der Gebläseräder 23 an der dem Antriebsmotor 4 abgewandten Seite jeweils ein Absatz 47 ausgebildet. Wie Fig. 12 schematisch zeigt, ragt in den Absatz 47 ein Wandabschnitt 54 des benachbarten Leitrads 24. Durch diese Überlappung der Innenwandabschnitte 45 und 46 wird eine labyrinthartige Abdichtung des Innenraums 51 erreicht. An der dem Antriebmotor 4 abgewandten Seite besitzt das in Fig. 12 nur schematisch gezeigte Leitrad 24 einen entsprechenden Absatz 55, in den ein Wandabschnitt 56 des Gebläserads 23 ragt. Dadurch wird eine weitgehende Abdichtung des Innenraums 51 gegenüber dem zwischen Innenwand 25 und Außenwand 26 gebildeten Ringraum erreicht. Die über die verbleibenden Undichtigkeiten in den Innenraum 51 einströmende Luft wird über die Zwischenwände 61 weitgehend am Zurückströmen zum Antriebsmotor 4 gehindert.

Wie Fig. 12 auch zeigt, sind an der Außenseite des Zapfens 37 radial nach außen gerichtete Rippen 41 vorgesehen, die zur Verbindung des Zapfens 37 mit dem Innenwandabschnitt 45 und zur Versteifung dienen.

Der in Fig. 12 schematisch gezeigte Rotor 22 besitzt an seinem Außenumfang und an seiner dem Gebläserad 23 zugewandten Vorderseite 49 eine Vielzahl von Lüfterrippen 43. Wie Fig. 13 schematisch zeigt, ragt zwischen zwei benachbarte Lüfterrippen 43 der Mitnahmeansatz 42 des Gebläserads 23. Dadurch wird eine drehfeste Verbindung zwischen dem Rotor 22 und dem Gebläserad 23 erreicht.

## Patentansprüche

1. Handgeführtes Blasgerät mit einem Gehäuse (2), mit einem Axialgebläse (6), das Luft durch ein Blasrohr (7) fördert, und mit einem elektrischen Antriebsmotor (4), der einen Rotor (22) und einen Stator (21) besitzt und der eine Antriebswelle (16) und mindestens ein Gebläserad (23) des Axialgebläses (6) rotierend antreibt,
wobei die Antriebswelle (16) im Gehäuse (2) drehbar gelagert ist, wobei der Rotor (22) des Antriebsmotors (4) drehfest mit der Antriebswelle (16) verbunden ist, wobei der Stator (21) des Antriebsmotors (4) drehbar auf der Antriebswelle (16) gelagert ist, und wobei der Stator (21) gegenüber dem Gehäuse (2) gegen Drehung abgestützt ist **dadurch gekennzeichnet, dass** der Stator (21) gegenüber dem Gehäuse (2) in mindestens eine Richtung beweglich ist, wobei der Stator (21) gegenüber dem Gehäuse (2) verkippen kann.

2. Blasgerät nach Anspruch 1,
**dadurch gekennzeichnet, dass** die Beweglichkeit des Stators (21) gegenüber dem Gehäuse (2) begrenzt ist.

3. Blasgerät nach Anspruch 1 oder 2,
**dadurch gekennzeichnet, dass** der Stator (21) gegenüber dem Gehäuse (2) ausschließlich gegen Drehung abgestützt ist.

4. Blasgerät nach einem der Ansprüche 1 bis 3,
**dadurch gekennzeichnet, dass** der Antriebsmotor (4) einen Anschlussflansch (28) besitzt, der mit dem Stator (21) verbunden ist, wobei der Anschlussflansch (28) am Gehäuse (2) drehfest abgestützt ist.

5. Blasgerät nach Anspruch 4,
**dadurch gekennzeichnet, dass** der Anschlussflansch (28) ein Schraubauge (29) besitzt, das zwischen zwei Wandabschnitte (48) des Gehäuses (2) ragt, wobei die Wandabschnitte (48) das Schraubauge (29) gegen die Drehrichtung abstützen.

6. Blasgerät nach einem der Ansprüche 1 bis 5,
**dadurch gekennzeichnet, dass** der Rotor (22) Lüfterrippen (43) besitzt, die sich am Umfang und an der dem Axialgebläse (6) zugewandten Vorderseite (49) des Rotors (22) erstrecken, und dass insbesondere das Gebläserad (23) mindestens einen Mitnahmeansatz (42) besitzt, der zwischen zwei Lüfterrippen (43) des Rotors (22) ragt.

7. Blasgerät nach einem der Ansprüche 1 bis 6,
**dadurch gekennzeichnet, dass** das Axialgebläse (6) eine Außenwand (26) und eine Innenwand (25) besitzt, wobei die Innenwand (25) einen Innenraum (51) begrenzt, in dem die Antriebswelle (16) angeordnet ist, und wobei die Gebläseschaufeln (35) des Gebläserads (23) in dem Ringraum zwischen Innenwand (25) und Außenwand (26) angeordnet sind.

8. Blasgerät nach Anspruch 7,
**dadurch gekennzeichnet, dass** der Antriebsmotor (4) in dem Innenraum (51) angeordnet ist.

9. Blasgerät nach Anspruch 8,
**dadurch gekennzeichnet, dass** das Axialgebläse (6) mehrere Leiträder (24) und mehrere Gebläseräder (23) besitzt, wobei insbesondere an jedem Leitrad (24) und an jedem Gebläserad (23) ein Innenwandabschnitt (45, 46) angeformt ist, wobei sich benachbarte Innenwandabschnitte (45, 46) überlappen.

10. Blasgerät nach Anspruch 9,
**dadurch gekennzeichnet, dass** an den Leiträdern (24) jeweils ein Außenwandabschnitt (44) angeformt ist, wobei die Außenwandabschnitte (44) der Leiträder (24) eine im Wesentlichen durchgehende Außenwand (26) des Axialgebläses (6) bilden.

11. Blasgerät nach einem der Ansprüche 1 bis 10,
**dadurch gekennzeichnet, dass** das Axialgebläse (6) mindestens zwei Gebläseräder (23) besitzt, wobei die Gebläseräder (23) formschlüssig miteinander verbunden sind, wobei zur formschlüssigen Verbindung der Gebläseräder (23) insbesondere eine Verbindungshülse (34) vorgesehen ist, die die Antriebswelle (16) umgibt, und die mit ihren Enden formschlüssig in benachbarte Gebläseräder (23) eingreift.

12. Blasgerät nach einem der Ansprüche 1 bis 11,
**dadurch gekennzeichnet, dass** das Axialgebläse (6) im Bereich des Gebläseausgangs (50) einen Austrittskonus (8) besitzt, an dem Strömungsleitrippen (9) angeordnet sind.

13. Blasgerät nach einem der Ansprüche 1 bis 12,
**dadurch gekennzeichnet, dass** der Antriebsmotor (4) ein Außenläufermotor ist.

## Claims

1. Hand-guided blowing device having a housing (2), an axial fan (6) carrying air through a blowpipe (7) and an electric drive motor (4) having a rotor (22) and a stator (21) and driving a drive shaft (16) and at least one fan impeller (23) of the axial fan (6),
wherein the drive shaft (16) is rotatably mounted in the housing (2), wherein the rotor (22) of the drive motor (4) is non-rotatably connected to the drive shaft (16), wherein the stator (21) of the drive motor (4) is rotatably mounted on the drive shaft (16), and wherein the stator (21) is supported against rotation with respect to the housing (2),
**characterised in that** the stator (21) is movable with respect to the housing (2) in at least one direction, wherein the stator (21) can tilt with respect to the housing (2).

2. Blowing device according to claim 1,
**characterised in that** the mobility of the stator (21) with respect to the housing (2) is limited.

3. Blowing device according to claim 1 or 2,
**characterised in that** the stator (21) is exclusively supported against rotation with respect to the housing (2).

4. Blowing device according to any of claims 1 to 3,
**characterised in that** the drive motor (4) has a connecting flange (28) connected to the stator (21), wherein the connecting flange (28) is non-rotatably supported on the housing (2).

5. Blowing device according to claim 4,
**characterised in that** the connecting flange (28) has a screwing eye (29), which extends between two wall sections (48) of the housing (2), wherein the wall sections (48) support the screwing eye (29) against the direction of rotation.

6. Blowing device according to any of claims 1 to 5,
**characterised in that** the rotor (22) has fan fins (43), which extend at the circumference and at the front side (49) - facing the axial fan (6) - of the rotor (22), and **in that** the fan impeller (23) in particular has at least one driving lug (42), which projects between two fan fins (43) of the rotor (22).

7. Blowing device according to any of claims 1 to 6,
**characterised in that** the axial fan (6) has an outer wall (26) and an inner wall (25), wherein the inner wall (25) bounds an interior (51), in which the drive shaft (16) is located, and wherein the fan blades (35) of the fan impeller (23) are located in the annular space between the inner wall (25) and the outer wall (26).

8. Blowing device according to claim 7,
**characterised in that** the drive motor (4) is located in the interior (51).

9. Blowing device according to claim 8,
**characterised in that** the axial fan (6) has several guide vanes (24) and several fan impellers (23), wherein an inner wall section (45, 46) is in particular formed on each guide vane (24) and on each fan impeller (23), adjacent inner wall sections (45, 46) overlapping each other.

10. Blowing device according to claim 9,
**characterised in that** an outer wall section (44) is formed on each guide vane (24), wherein the outer wall sections (44) of the guide vanes (24) form a substantially continuous outer wall (26) of the axial fan (6).

11. Blowing device according to any of claims 1 to 10,
**characterised in that** the axial fan (6) has at least two fan impellers (23), wherein the fan impellers (23) are positively connected to each other, wherein, for the positive connection of the fan impellers (23), there is in particular provided a connecting sleeve (34), which surrounds the drive shaft (16) and positively engages with adjacent fan impellers (23) with its ends.

12. Blowing device according to any of claims 1 to 11,
**characterised in that** the axial fan (6) has an exit cone (8), on which flow guidance fins (9) are located, in the region of the fan outlet (50).

13. Blowing device according to any of claims 1 to 12,
**characterised in that** the drive motor (4) is an external rotor motor.

## Revendications

1. Appareil de soufflage à main avec un boîtier (2), avec une soufflante axiale (6) qui refoule de l'air à travers un tube de soufflage (7), et avec un moteur d'entraînement électrique (4) qui comporte un rotor (22) et un stator (21) et qui entraîne en rotation un arbre d'entraînement (16) et au moins une roue de soufflante (23) de la soufflante axiale (6),
dans lequel l'arbre d'entraînement (16) est monté rotatif dans le boîtier (2), dans lequel le rotor (22) du moteur d'entraînement (4) est relié fixe en rotation à l'arbre d'entraînement (16), dans lequel le stator (21) du moteur d'entraînement (4) est monté rotatif sur l'arbre d'entraînement (16), et dans lequel le stator (21) est supporté sans rotation par rapport au boîtier (2), **caractérisé en ce que** le stator (21) est mobile par rapport au boîtier (2) dans au moins une direction, dans lequel le stator (21) peut basculer par rapport au boîtier (2).

2. Appareil de soufflage selon la revendication 1,
**caractérisé en ce que** la mobilité du stator (21) par rapport au boîtier (2) est limitée.

3. Appareil de soufflage selon la revendication 1 ou 2,
**caractérisé en ce que** le stator (21) est supporté par rapport au boîtier (2) uniquement sans rotation.

4. Appareil de soufflage selon l'une des revendications 1 à 3,
**caractérisé en ce que** le moteur d'entraînement (4) comporte une bride de raccordement (28) qui est reliée au stator (21), dans lequel la bride de raccordement (28) est supportée fixe en rotation sur le boîtier (2).

5. Appareil de soufflage selon la revendication 4,
**caractérisé en ce que** la bride de raccordement (28) comporte un œillet de vissage (29) qui dépasse entre deux sections de paroi (48) du boîtier (2), dans lequel les sections de paroi (48) supportent l'œillet de vissage (29) contre la direction de rotation.

6. Appareil de soufflage selon l'une des revendications 1 à 5,
**caractérisé en ce que** le rotor (22) comporte des ailettes de ventilateur (43) qui s'étendent sur la circonférence et sur le côté avant (49) du rotor (22) tourné vers la soufflante axiale (6), et **en ce qu'**en particulier la roue de soufflante (23) comporte au moins une saillie d'entraînement (42) qui dépasse entre deux ailettes de ventilateur (43) du rotor (22).

7. Appareil de soufflage selon l'une des revendications 1 à 6,
**caractérisé en ce que** la soufflante axiale (6) comporte une paroi extérieure (26) et une paroi intérieure (25), dans lequel la paroi intérieure (25) délimite un espace intérieur (51) dans lequel est disposé l'arbre d'entraînement (16), et dans lequel les pales de soufflante (35) de la roue de soufflante (23) sont disposées dans l'espace annulaire entre la paroi intérieure (25) et la paroi extérieure (26).

8. Appareil de soufflage selon la revendication 7,
**caractérisé en ce que** le moteur d'entraînement (4) est disposé dans l'espace intérieur (51).

9. Appareil de soufflage selon la revendication 8,
**caractérisé en ce que** la soufflante axiale (6) comporte plusieurs roues directrices (24) et plusieurs roues de soufflante (23), dans lequel une section de paroi intérieure (45, 46) est rapportée en particulier sur chaque roue directrice (24) et sur chaque roue de soufflante (23), dans lequel des sections de paroi intérieure (45, 46) voisines se recouvrent.

10. Appareil de soufflage selon la revendication 9,
**caractérisé en ce qu'**une section de paroi extérieure (44) est rapportée respectivement sur les roues conductrices (24), dans lequel les sections de paroi extérieure (44) des roues directrices (24) forment une paroi extérieure (26) sensiblement continue de la soufflante axiale (6).

11. Appareil de soufflage selon l'une des revendications 1 à 10,
**caractérisé en ce que** la soufflante axiale (6) comporte au moins deux roues de soufflante (23), dans lequel les roues de soufflante (23) sont reliées par complémentarité de forme entre elles, dans lequel pour la liaison par complémentarité de forme des roues de soufflante (23) il est prévu en particulier un manchon de liaison (34) qui entoure l'arbre d'entraînement (16) et qui vient en prise avec ses extrémités par complémentarité de forme dans des roues de soufflante (23) voisines.

12. Appareil de soufflage selon l'une des revendication 1 à 11,
**caractérisé en ce que** la soufflante axiale (6) comporte dans la zone de la sortie de soufflante (50) un cône de sortie (8) sur lequel sont disposées des ailettes de guidage d'écoulement (9).

13. Appareil de soufflage selon l'une des revendications 1 à 12,
**caractérisé en ce que** le moteur d'entraînement (4) est un moteur à induit extérieur.
